# EUROPEAN PATENT APPLICATION

(11) **EP 1 249 999 A1**
(43) Date of publication of application: **16.10.2002**
(21) Application number: 02007641.0
(22) Date of filing: 04.04.2002
(51) Int. Cl.: H04N 5/00, H04N 7/173

(54) **Broadcast data system**

(30) Priority: 10.04.2001 GB 0108911
(71) Applicant: Pace Micro Technology Ltd, Saltaire, Shipley BD18 3LF (GB)
(72) Inventor: Frost, Jonathan Andrew, Bradford, West Yorkshire BD10 8WH (GB)
(74) Representative: Wood, Graham

(57) **Abstract**

The invention relates to a system and method for the generation of Video on Demand programmes or items via a television broadcast system. The broadcast system typically comprises a means for receiving broadcast data, a receiver for processing the data and a television or other display apparatus for displaying the selected programme. Video on Demand programmes can be selected for display at any or any of a range of times by the system user. In the current invention, to avoid the delay experienced between a VoD programme being selected and the same actually being displayed, initial portions of data for the selectable VoD programmes are stored in memory in the system such that upon selection of the particular programme, the initial portion of the data is immediately displayed and as this occurs the remaining data for the selected programme is transmitted to the receiver for display after the display of the initial portion.

## Description

This invention relates to a broadcast data system where data is broadcast from a remote location to one or more broadcast data receivers at one or more locations.

Television apparatus typically includes a broadcast data receiver for receiving digital data in the form of video, audio and/or auxiliary data broadcast from a remote location via cable/satellite/terrestrial means. The receiver processes the data to provide video display via a display screen connected thereto and/or audio display via speakers connected thereto. The receiver is also provided with memory means to store data thereon. The broadcast data receiver is provided with one or more tuners for receiving digital data streams typically broadcast over a number of different bandwidths.

Digital broadcast data systems have the ability to provide Video on Demand (VoD) to users of broadcast data receivers. This allows the user to view a series of "selectable programmes", which are typically in the form of films, sporting events, concerts and/or the like, as and when they wish. The programmes are typically selected by a user using a television programme guide or similar options page and agreeing to make a payment to gain access to an item or items available. The user's television apparatus sends a signal to the broadcaster supplying the selected programme to indicate a selection has been made. The selected VoD programme is then transmitted to the user's television apparatus to be received by the broadcast data receiver at a set time.

The time taken from user selection of a VoD programme/item to transmission of the programme/item to the user's apparatus can often take a prolonged period of time, often at least 15 minutes even in the case of popular programmes. This is because the VoD programme data is transmitted by multiplexing the same over several available channels/bandwidths. A solution to this problem is to store all the VoD programmes in the memory means of the receiver so that the same can be quickly accessed but this is obviously undesirable due to the amount of memory it would use.

It is therefore an aim of the present invention to provide a broadcast data system which overcomes the above problem and reduces the time taken for VoD programmes/items to be viewable on the user's apparatus once selected.

According to a first aspect of the present invention there is provided a broadcast data system for use with broadcast data where at least a part of the data is selectively broadcast using a Video on Demand (VoD) system, said broadcast data system including a broadcast data receiver having one or more tuners to receive and process the broadcast data for display on a display screen and memory means provided in or connected to the broadcast data receiver and characterised in that at least an initial portion of data relating to one or more selectable VoD programmes or items is transmitted to said broadcast data receiver prior to selection by a user, said initial portion being stored in the memory means and being retrievable therefrom for viewing if the one or more selectable VoD programmes or items is/are subsequently selected by the user of the VoD system.

Preferably the initial portion of data relating to the one or more selectable VoD programmes is transmitted to the broadcast data receiver when the one or more tuners are not in use.

Thus according to the present invention when a user selects a VoD programme, the initial stored portion of the programme is available for viewing without delay, during which time the broadcaster transmits the remaining portion of the selected VoD programme to the receiver, thereby allowing the user to have instant access to VoD programmes.

Preferably the initial portion of data relating to the VoD programme includes the beginning of one or more available programmes up to a pre-determined time interval.

Preferably the initial portion of data relating to all available VoD programmes are stored in the memory means.

Preferably the stored data is regularly updated so that the initial portion of VoD programmes stored in the memory means represents the options currently available to the user on their display screen or VoD schedule.

Preferably the initial portion of data relating to the VoD programmes comprises one or more trailers and/or advertisements. In one embodiment the trailers and/or advertisements can be common to all the selectable VoD programmes, thereby reducing the amount of memory required to store the same. Alternatively the trailers and/or advertisements can be different for each VoD programme selected. In this embodiment identification means typically link one or more adverts to each selectable programme.

Preferably the memory means in the broadcast data receiver is a hard disk drive.

According to a second aspect of the present invention there is provided a method of using a broadcast data system where at least a part of the data is selectively broadcast using a Video on Demand (VoD) system, said broadcast data system including a broadcast data receiver having one or more tuners to receive and process broadcast data for display on a display screen and characterised in that said method includes the steps of transmitting at least an initial portion of VoD data to said broadcast data receiver, storing the at least initial portion of VoD data in memory means in said broadcast data receiver, retrieving and displaying said initial portion of VoD on a display screen connected to said broadcast data receiver when a user selects a programme to which the VoD data relates and during display of said initial portion of VoD data, said broadcast data receiver receiving a remaining portion of said selected VoD data and processing the remaining portion of selected VoD data for display following the display of the initial selected portion of the VoD data.

Preferably the initial portion of VoD data is sent to the broadcast data receiver when the one or more tuners are not in use.

The present invention has the advantage over the current method of transmitting VoD data in that the user has almost instantaneous access to a VoD programme/item once a selection has been made. This greatly reduces the time that may be incurred by the broadcaster multiplexing the programme data over several channels. In addition, there is no requirement to store all the data relating to each selectable VoD programme/item on the hard disk drive of the broadcast data receiver.

An embodiment of the present invention will now be described below.

A broadcast data system is provided which broadcasts digital data via cable, satellite or terrestrial means from a broadcaster at a remote location to a number of user's television apparatus. The user's television apparatus includes a broadcast data receiver which receives broadcast data in the form of video, audio and/or auxiliary data and processes the same for display on a display screen connected to the receiver or for transmission via speakers connected to the receiver. The broadcast data includes information on user selectable VoD programmes, which can be selected from a menu or options page or a display page of an electronic programme guide.

In accordance with the present invention the television apparatus includes one or more tuners which receive digital data in the form of one or more incoming data streams. When one or more of the tuners are redundant or are not performing a high priority function, such as receiving channel data required for viewing by a user, the redundant tuner or tuners can be used to receive the initial portions of VoD programmes available for selection. The initial portions of the programmes are stored/cached in the hard disk drive storage space of the broadcast data receiver. Thus when a user selects a VoD programme and the user has agreed to an authorised payment for the service, which is verified and accepted by the broadcaster, the broadcast data receiver displays the initial portion of the selected programme stored on the hard disk and the user can begin to watch the selected programme almost immediately.

Whilst the initial portion of the programme is being shown, the remaining portion of the programme can be transmitted from the broadcaster to the receiver. Thus using the method according to the present invention, the user does not experience the delay frequently associated with transmission of data relating to the selected VoD programme to the user's television apparatus. In addition, the entire programme is not required to be stored on the hard disk, which inevitably uses up valuable disk space, particularly if a large number of VoD programmes are available.

The remaining portion of the programme can be transmitted to the receiver in the conventional manner, such as using channel multiplexing and/or the like.

For example, it is often the case that popular VoD programmes can take at least 15 minutes from user selection to transmission to the receiver for viewing. As such, an initial portion of each available programme can be stored on the hard disk drive of the receiver for selection by a user. This initial portion is immediately available for viewing and whilst being viewed, the remaining data of the VoD programme can be received and stored for viewing on the display screen immediately after the initial portion. Thus the user is unaware of any undue delay between selecting a VoD programme and display of the same.

Software in the receiver typically detects the tuners being in a redundant state and instructs the same to receive initial portions of VoD programme data when detected as being in the said redundant state.

The initial portion of the VoD programme stored on the hard disk can relate to advertisements and/or trailers which are played prior to the transmission of the selected programme data, thereby filling any gap which may be caused by the delay of transmission of the VoD programme. The advertisements and/or trailers are typically common to all available VoD programmes, thereby reducing the storage space required on the hard disk.

The method used for recognition and joining of the initial portion of data relating to the VoD programme with the remaining portion of data for the VoD programme is, for example, via a data descriptor. The data descriptor uniquely identifies the complete VoD programme and may also refer to other data, such as where to find the love VoD service, expiry data/time and/or the like. When the user requests to view the programme, the descriptor data can be used to link the stored initial portion of the programme with the live service from which the remaining portion of the programme will be retrieved.

Thus it can be seen that the present invention greatly reduces, if not abolishes, the delay often associated with transmission of VoD programmes to the user's television receiving apparatus for viewing by a user.

## Claims

1. A broadcast data system for use with broadcast data where at least a part of the data is selectively broadcast using a Video on Demand (VoD) system, said broadcast data system including a broadcast data receiver having one or more tuners to receive and process the broadcast data for display on a display screen and memory means provided in or connected to the broadcast data receiver and **characterised in that** at least an initial portion of data relating to one or more selectable VoD programmes or items is transmitted to said broadcast data receiver prior to selection by a user, said initial portion being stored in the memory means and being retrievable therefrom for viewing if the one or more selectable VoD programmes or items is/are subsequently selected by the user of the VoD system.

2. A system according to claim 1 **characterised in that** the initial portion of data relating to the one or more selectable VoD programmes is transmitted to the broadcast data receiver when the one or more tuners are not in use.

3. A system according to claim 1 **characterised in that** when a user selects a VoD programme, the initial stored portion of the programme is available for viewing during which time the broadcaster transmits the remaining portion of the selected VoD programme to the receiver, thereby allowing the user to have access to the whole VoD programme.

4. A system according to claim 1 **characterised in that** the initial portion of data relating to the VoD programme includes the beginning of one or more available programmes within a pre-determined time interval.

5. A system according to claim 1 **characterised in that** the initial portion of data relating to all available VoD programmes are stored in the memory means.

6. A system according to claim 1 **characterised in that** the stored data is regularly updated so that the initial portion of VoD programmes stored in the memory means represents the options currently available to the user on their display screen or VoD schedule.

7. A system according to claim 1 **characterised in that** the initial portion of data relating to the VoD programmes includes one or more trailers and/or advertisements.

8. A system according to claim 7 wherein the trailers and/or advertisements are common to all the selectable VoD programmes.

9. A system according to claim 7 wherein the data relating to trailers and/or advertisements is provided with identification means for allowing the data to be linked to a selectable programme.

10. A method of using a broadcast data system where at least a part of the data is selectively broadcast using a Video on Demand (VoD) system, said broadcast data system including a broadcast data receiver having one or more tuners to receive and process broadcast data for display on a display screen and **characterised in that** said method includes the steps of transmitting at least an initial portion of VoD data to said broadcast data receiver, storing the at least initial portion of VoD data in memory means in said broadcast data receiver, retrieving and displaying said initial portion of VoD on a display screen connected to said broadcast data receiver when a user selects a programme to which the VoD data relates and during display of said initial portion of VoD data, said broadcast data receiver receiving a remaining portion of said selected VoD data and processing the remaining portion of selected VoD data for display following the display of the initial selected portion of the VoD data.

11. A method according to claim 10 wherein the initial portion of VoD data is sent to the broadcast data receiver when the one or more tuners are not in use.
